# EUROPÄISCHE PATENTANMELDUNG

(11) **EP 3 747 982 A1**
(43) Veröffentlichungstag der Anmeldung: **09.12.2020**
(21) Anmeldenummer: 20178849.4
(22) Anmeldetag: 08.06.2020
(51) Int. Cl.: C12C 13/08, C12C 12/00, C12C 7/20, C12C 5/02

(54) **VERFAHREN ZUR HERSTELLUNG VON BIER SOWIE WÜRZEPFANNE ZUR VERWENDUNG IN DIESEM VERFAHREN**

(30) Priorität: 06.06.2019 DE 102019003972
(71) Anmelder: Fürst von Wrede GmbH & Co. Unternehmens-KG, 91792 Ellingen (DE)
(72) Erfinder: Sauer, Werner, 24944 Flensburg (DE)
(74) Vertreter: Mahler, Peter

(57) **Zusammenfassung**

Die vorliegende Erfindung betrifft ein Verfahren zur Herstellung von Bier sowie eine Würzepfanne zur Verwendung in diesem Verfahren. Es ist Aufgabe der Erfindung, ein Verfahren zur Herstellung von Bier vorzuschlagen, mit dem der Geschmack des Biers positiv beeinflusst werden kann. Die Aufgabe wird erfindungsgemäß gelöst durch ein Verfahren zur Herstellung von Bier, das dadurch gekennzeichnet ist, dass die Würze vor und/oder während des Kochens mindestens zeitweise mit mindestens einem Körper mit mindestens einem heißen Oberflächenbereich mit einer Oberflächentemperatur zwischen 180°C und 240°C in Kontakt gebracht wird. Vorteilhaft kann der Körper in die Oberfläche der Würzepfanne integriert sein. Die Würzepfanne kann dann die üblichen Heizeinrichtungen zum Kochen der Würze aufweisen und zusätzlich mindestens einen Oberflächenbereich, in dem höhere Temperaturen, wie oben definiert, erreichbar sind. Insbesondere kann ein Oberflächenbereich der Würzepfanne auf mindestens 180°C aufheizbar sein.

## Beschreibung

Die vorliegende Erfindung betrifft ein Verfahren zur Herstellung von Bier sowie eine Würzepfanne zur Verwendung in diesem Verfahren.

Bier wird in einem Brauverfahren hergestellt, bei dem zunächst aus Getreide, vorwiegend Gerste oder Weizen, Malz hergestellt wird. Das Malz wird dann geschrotet. Anschließend wird dem Schrot beim Maischen Wasser zugesetzt und die Maische auf unterschiedliche Art thermisch behandelt, bis die in der Maische enthaltene Stärke vollständig in Malzzucker (Maltose) umgesetzt ist.

Anschließend wird die Maische geläutert. Dabei wird der Malztreber in einem Läuterbottich von der Flüssigkeit, der sogenannten Würze getrennt. Die Würze ist der flüssige, vergärbare Teil der Maische. Als Vorderwürze wird dabei der unmittelbar aus dem Läutergefäß gewinnbare flüssige Teil der Maische bezeichnet. Nach Ablauf der Vorderwürze werden die beim Maischen aufgeschlossenen Extrakte durch Nachgüsse mit heißem Wasser aus dem Treber ausgewaschen.

Die gesamte Würze bestehend aus Vorderwürze und Aufgüssen wird dann in der Würze- oder Sudpfanne unter Zugabe von Hopfen gekocht. Heute wird die Würze dazu in der Würzepfanne, die aus Kupfer oder Edelstahl besteht, erhitzt. Früher bestanden Sudpfannen oft aus Holz oder Lehm, so dass eine direkte Beheizung nicht möglich war. Zum Kochen der Würze wurden deshalb Steine im Feuer auf bis zu 800°C erhitzt und in die Würze eingebracht, so dass die Würze zum Kochen gebracht werden konnte. Auch heute wird noch sogenanntes Steinbier gebraut, bei dem im Brauprozess heiße Steine eingesetzt werden.

Durch die hohe Temperatur der heißen Steine kommt es zum Karamellisieren der Maltose an der Oberfläche der Steine, wodurch der Geschmack des Biers beeinflusst wird. Die hohe Temperatur der Steine kann jedoch auch zu unangenehmen, bitteren Geschmacksnoten führen.

Nach dem Sud werden noch geronnenes Eiweiß und andere Schwebstoffe von der Würze getrennt, die Flüssigkeit auf die Gärtemperatur abgekühlt und zur Gärung in einen Lagertank gefüllt.

Die traditionelle Herstellungsweise von Steinbier ermöglicht grundsätzlich die Schaffung von interessanten Aromen. Die Parameter des Brauprozesses sind aber wenig kontrollierbar.

Es ist Aufgabe der Erfindung, ein Verfahren zur Herstellung von Bier vorzuschlagen, mit dem der Geschmack des Biers positiv beeinflusst werden kann.

Die Aufgabe wird erfindungsgemäß gelöst durch ein Verfahren zur Herstellung von Bier, das dadurch gekennzeichnet ist, dass die Würze vor und/oder während des Kochens mindestens zeitweise mit mindestens einem Körper mit mindestens einem heißen Oberflächenbereich mit einer Oberflächentemperatur zwischen 180°C und 240°C in Kontakt gebracht wird.

Durch den Kontakt mit einem Körper mit einer heißen Oberfläche im genannten Temperaturbereich kann in der Würze ein Karamellisierungsprozess durch die in der Würze enthaltenen Maltose herbeigeführt werden.

Maltose beginnt etwa bei 180°C zu karamellisieren, so dass der heiße Oberflächenbereich des Körpers eine Oberflächentemperatur von mindestens 180°C aufweisen sollte. Bei einer Temperatur von mehr als 180° bildet sich dunkleres Karamell mit geschmacklich gut wahrnehmbaren Karamell- und Röstaromen. Wird die Temperatur weiter erhöht, entstehen bittere Geschmacksnoten, die bis zu einem gewissen gerade für eine bitter-herbe Note des Biers sorgen. Die Oberflächentemperatur des heißen Oberflächenbereich des Körpers soll vorzugsweise 240°C nicht überschreiten.

Zur besseren Steuerung des Brauprozesses kann die Temperatur des heißen Oberflächenbereichs vorzugsweise regelbar sein. Die Parameter des Brauprozesses und insbesondere die Karamellisierung der Maltose können so nach Belieben gesteuert und damit unterschiedliche Geschmacksnoten geschaffen werden. Insbesondere kann die Oberflächentemperatur zeitlich variiert werden.

Der Körper kann in die Würze eingetaucht werden, beispielsweise in der Würzepfanne vor oder während der Kochung, oder die Würze kann über den Körper geleitet werden, beispielsweise beim Läutern, wenn die Würze aus dem Läuterbottich über den Körper in die Würzepfanne laufen kann. Es kann auch kontinuierlich Würze aus der Würzepfanne über den Körper und zurück in die Würzepfanne geleitet werden. Eine Kombination aus Eintauchen und Darüberleiten ist auch möglich, beispielsweise indem die Würze über einen über dem Boden einer Braupfanne angeordneten Körper geleitet wird, bis der Körper vollständig von der Würze bedeckt ist.

Die Kontaktzeit des Körpers mit der Würze kann beispielsweise zwischen 1 Minute und 120 Minuten betragen und hängt neben dem gewünschten Geschmacksergebnis auch von der Oberflächentemperatur ab. Insbesondere kann die Kontaktzeit länger als 5 Minuten sein. Vorteilhaft sollte sie 60 Minuten nicht überschreiten.

Beispielsweise kann der Körper mit heißer Oberfläche mit einer Oberflächentemperatur von mindestens 220°C mit der Würze in Kontakt gebracht und über ein Zeitintervall von 60 min auf 180°C abgekühlt werden. So kann etwa der Temperaturverlauf bei der Herstellung von Steinbier imitiert werden, bei dem die heißen Steine im Laufe der Zeit abkühlen. Durch die freie Wahl der Temperatur können zu hohe Temperaturen, bei denen zu viele Bitterstoffe entstehen, vermieden werden. Die Zeitdauer des Einsatzes des Körpers kann nach Belieben variiert werden.

Ein umgekehrter Temperaturverlauf, bei dem die Oberflächentemperatur des Körpers in der Würze von 180°C über ein Zeitintervall von 60 min auf mindestens 220°C aufgeheizt wird, ist ebenfalls denkbar. Durch die Möglichkeit der Steuerung der Temperatur wird es möglich, bestimmte Werte, die sich als besonders vorteilhaft erwiesen haben, länger zu halten und beispielsweise lediglich gegen Ende der Karamellisierung die Temperatur kurz zu erhöhen, um leichte Röst- und Bitteraromen zu erzielen.

Bestimmte zeitliche Temperaturprofile können so gezielt ausgewählt und somit der Geschmack des Biers sehr gezielt beeinflusst werden.

Auf der heißen Oberfläche kann sich Karamell anlagern, der in die Würze oder in das reifende Bier übergehen soll. Hierfür kann beispielsweise der Körper nach Kontakt mit der Würze in den Lagertank gelegt werden. Während der Lagerung und Gärung kann sich das Karamell von der dann abgekühlten Oberfläche lösen und in das Bier übergehen.

Der Körper kann auch nach Kontakt mit der Würze mit Flüssigkeit gespült und die Spülflüssigkeit der Würze zugegeben werden. Insbesondere kann es sich bei der Spülflüssigkeit um Bierwürze handeln. Es kann aber auch Wasser verwendet werden, insbesondere erhitztes Wasser.

Es ist auch möglich, dass der Körper in der Bierwürze zumindest zeitweise einer Flüssigkeitsströmung ausgesetzt ist. Die Anlagerung von Karamell an der heißen Oberfläche kann dadurch begrenzt werden. Das sich bildende Karamell wird laufend gelöst und in der Würze aufgenommen.

Der Körper kann je nach gewünschtem Effekt zumindest teilweise eine glatte oder eine raue Oberfläche aufweisen. Je nach Oberflächenbeschaffenheit kann sich Karamell leichter oder schwerer anlagern. Eine glatte Oberfläche erlaubt die leichte Lösung und Aufnahme des Karamells in der Würze. Eine raue Oberfläche erleichtert die Anlagerung von Karamell an der heißen Oberfläche. Durch die längere Verweildauer auf der heißen Oberfläche kann sich dunkleres Karamell bilden und andere Aromen schaffen.

Der Körper kann beispielsweise kugelförmig, zylindrisch, würfelförmig oder torusförmig sein. Der Körper kann auch mehrere heiße Oberflächenbereiche aufweisen, deren Temperaturen getrennt voneinander wählbar sind. So können zeitgleich verschiedene Effekte in der Würze bewirkt werden.

Vorteilhaft kann die heiße Oberfläche in ihrer Oberflächenkontur veränderbar sein. Hierfür können beispielsweise im Inneren des Körpers Aktoren vorgesehen sein, die die Form des Körpers geringfügig beeinflussen können. Dadurch kann sich auf der Oberfläche bildendes Karamell gelöst und der Würze zugeführt werden.

Insbesondere kann bei der Läuterung ausschließlich die Vorderwürze, die besonders maltosehaltig ist, in die Sudpfanne eingeleitet und anschließend gemäß dem erfindungsgemäßen Verfahren behandelt werden. Neben der besonderen Qualität von Bier aus Vorderwürze kann das erfindungsgemäße Verfahren durch den hohen Maltoseanteil besonders effizient ablaufen.

Vorteilhaft kann der Körper in die Oberfläche der Würzepfanne integriert sein. Die Würzepfanne kann dann die üblichen Heizeinrichtungen zum Kochen der Würze aufweisen und zusätzlich mindestens einen Oberflächenbereich, in dem höhere Temperaturen, wie oben definiert, erreichbar sind. Insbesondere kann ein Oberflächenbereich der Würzepfanne auf mindestens 180°C aufheizbar sein.

Vorteilhaft kann die Würzepfanne Mittel zur Erzeugung einer Flüssigkeitsströmung aufweisen. So kann erreicht werden, dass sich hier bildendes Karamell in der Würze löst.

Der heiße Oberflächenbereich der Würzepfanne kann auch in seiner Kontur veränderbar sein, um sich dort bildendes Karamell zu lösen und in die Würze abzugeben..

## Patentansprüche

1. Verfahren zur Herstellung von Bier, **dadurch gekennzeichnet, dass** die Würze vor und/oder während des Kochens mindestens zeitweise mit mindestens einem Körper mit mindestens einem heißen Oberflächenbereich mit einer Oberflächentemperatur zwischen 180°C und 240°C in Kontakt gebracht wird.

2. Verfahren nach Anspruch 1, **dadurch gekennzeichnet, dass** die Oberflächentemperatur zeitlich variiert wird.

3. Verfahren nach Anspruch 1 oder 2, **dadurch gekennzeichnet, dass** der Körper in die Würze eingetaucht und/oder dass die Würze über den Körper geleitet wird.

4. Verfahren nach einem der Ansprüche 1 bis 3, **dadurch gekennzeichnet, dass** die Kontaktzeit des Körpers mit der Würze zwischen 1 Minute und 120 Minuten, insbesondere zwischen 10 Minuten und 60 Minuten beträgt.

5. Verfahren nach einem der Ansprüche 1 bis 4, **dadurch gekennzeichnet, dass** der Körper während des Kontakts mit der Würze von einer Oberflächentemperatur von mindestens 220°C über ein Zeitintervall von 60 min auf 180°C abgekühlt wird.

6. Verfahren nach einem der Ansprüche 1 bis 5, **dadurch gekennzeichnet, dass** der Körper während des Kontakts mit der Würze von einer Oberflächentemperatur von 180°C über ein Zeitintervall von 60 min auf mindestens 220°C aufgeheizt wird.

7. Verfahren nach einem der Ansprüche 1 bis 6, **dadurch gekennzeichnet, dass** der Körper nach Kontakt mit der Würze während der Gärung zumindest zeitweise in den Lagertank gelegt wird.

8. Verfahren nach einem der Ansprüche 1 bis 7, **dadurch gekennzeichnet, dass** der Körper nach Kontakt mit der Würze mit Flüssigkeit, insbesondere mit Bierwürze, gespült und die Spülflüssigkeit der Würze zugegeben wird.

9. Verfahren nach einem der Ansprüche 1 bis 8, **dadurch gekennzeichnet, dass** der Körper während des Kontakts mit der Bierwürze zumindest zeitweise einer Flüssigkeitsströmung ausgesetzt ist.

10. Verfahren nach einem der Ansprüche 1 bis 9, **dadurch gekennzeichnet, dass** der Körper zumindest teilweise eine glatte Oberfläche und/oder zumindest teilweise eine raue Oberfläche aufweist.

11. Verfahren nach einem der Ansprüche 1 bis 10, **dadurch gekennzeichnet, dass** die Oberflächenkontur des heißen Oberflächenbereichs veränderbar ist.

12. Verfahren nach einem der Ansprüche 1 bis 6 und 8 bis 11, **dadurch gekennzeichnet, dass** der Körper in die Oberfläche der Würzepfanne integriert ist.

13. Würzepfanne, **dadurch gekennzeichnet, dass** ein Oberflächenbereich der Würzepfanne auf mindestens 180°C aufheizbar ist.

14. Würzepfanne nach Anspruch 13, **dadurch gekennzeichnet, dass** die Würzepfanne Mittel zur Erzeugung einer Flüssigkeitsströmung aufweist.

15. Würzepfanne nach Anspruch 13 oder 14, **dadurch gekennzeichnet, dass** der heiße Oberflächenbereich der Würzepfanne in seiner Kontur veränderbar ist.
